# EUROPÄISCHE PATENTSCHRIFT

(11) **EP 1 288 987 B1**
(45) Veröffentlichungstag und Bekanntmachung des Hinweises auf die Patenterteilung: **14.09.2005**
(21) Anmeldenummer: 02400037.4
(22) Anmeldetag: 08.08.2002
(51) Int. Cl.: H01H 35/02

(54) **Neigungsschalter und Schaltungsanordnung hierfür**
Tilt switch and circuit therefor
Interrupteur actionné par inclinaison et circuit approprié

(30) Priorität: 24.08.2001 DE 10141538; 24.08.2001 DE 20114005 U
(43) Veröffentlichungstag der Anmeldung: 05.03.2003
(73) Patentinhaber: KMK Kunststoff- und Montagetechnik GmbH, 56348 Dörscheid (DE)
(72) Erfinder: Schnell, Heinz-Wilhelm, 56349 Kaub am Rhein (DE)
(74) Vertreter: Fuchs Mehler Weiss & Fritzsche

(56) Entgegenhaltungen:
- DE-U- 29 802 050
- FR-A- 2 591 782
- GB-A- 722 225

## Beschreibung

Die Erfindung bezieht sich auf einen Neigungsschalter mit einer in einem Gehäuse unter Schwerkraftwirkung abrollbaren Kugel, die in Abhängigkeit von der Neigungsstellung ihres Gehäuses elektrische Kontakte betätigt sowie eine Schaltungsanordnung dafür.

Bei bekannten Neigungsschaltern, wie z.B. in FR 2 591 782 A oder in GB 722 225 A offenbart, bei denen die Kontaktierung über eine Kugel innerhalb eines trichterförmigen bzw. Hohlkegelförmigen oder als Kugelkalotte ausgebildeten Gehäuses erfolgt, überbrückt die Kugel im Ruhezustand, d.h. wenn sie am Auslaß des Trichters liegt, zwei in diesem Bereich angeordnete Kontakte, und beim Umkippen des Gerätes und des mit ihm verbundenen Schaltergehäuses rollt die Kugel aus dieser Kontaktierungsstellung heraus und öffnet die Kontakte. Es ist auch bekannt, eine Kontaktgabe dann zu bewirken, wenn der Schalter ausgelenkt wird.

Um die angestrebte Sicherheitsfunktion zu gewährleisten, muß der Neigungsschalter in dem zu schützenden Gerät derart eingebaut werden, daß die Kontaktkugel in Normalstellung am tiefsten Punkt des Trichters liegt.

Der Erfindung liegt daher die Aufgabe zugrunde, einen Neigungsschalter zu schaffen, der in beliebiger Neigungslage am Gerät montierbar ist.

Gelöst wird die gestellte Aufgabe durch die im Kennzeichnungsteil des Patentanspruchs 1 angegebenen Merkmale. Dadurch, daß die Winkellage des Schaltelementes innerhalb des Schaltergehäuses eingestellt werden kann, läßt sich das Schaltergehäuse in beliebiger Lage am Gerät montieren. Die Winkellage ist dabei durch eine Skalierung einstellbar, so daß für jede Gerätetype ein entsprechend voreingestellter Schalter geliefert werden kann. Ein Schließen (oder Öffnen) der Kontakte kann über eine entsprechende Schaltungsanordnung, z.B. über ein Relais, zu einer Abschaltung des Gerätes benutzt werden, derart, daß eine Wiedereinschaltung des Gerätes nicht automatisch wieder bewirkt wird, wenn der Neigungsschalter in seine Ausgangsstellung zurückkehrt.

Die Erfindung bezieht sich auch auf Schaltungsanordnungen, durch die ein ungewolltes, gefahrvolles sofortiges Wiedereinschalten verhindert wird. Derartige Schaltungsanordnungen sind in den Unteransprüchen gekennzeichnet.

Nachstehend werden Ausführungsbeispiele der Erfindung anhand der Zeichnung beschrieben. In der Zeichnung zeigen:
Fig. 1 ist eine perspektivische Ansicht eines Neigungsschalters;
Fig. 2 ist eine axiale Ansicht des Neigungsschalters gemäß Fig. 1;
Fig. 3 ist ein Schnitt nach der Linie VII-VII gemäß Fig. 2;
Fig. 4 ist eine Schnittansicht des Neigungsschalters gemäß Fig. 1 und 2 in Ruhestellung;
Fig. 5 ist eine Schnittansicht des Neigungsschalters gemäß Fig. 1 und 2 in gekippter Schaltstellung;
Fig. 6 ist eine perspektivische Ansicht eines bezüglich seiner Einbaulage einstellbaren Neigungsschalters.
Fig. 7 ist ein Schaltbild eines elektrischen Gerätes mit einem als Einschalter ausgebildeten Neigungsschalter;
Fig. 8 ist ein Schaltbild eines elektrischen Gerätes mit einem als Einschalter ausgebildeten Neigungsschalter und einem Unterspannungsauslöser.

Gemäß den in der Zeichnung dargestellten Ausführungsbeispielen ist der Neigungsschalter rotationssymmetrisch als trichterartiger Hohlkegel oder als Kugelkalotte ausgebildet und nachstehend als "Trichter" bezeichnet, d.h. er schaltet bei Überschreiten einer vorbestimmten Winkellage, unabhängig davon, in welcher Richtung die Neigung erfolgt.

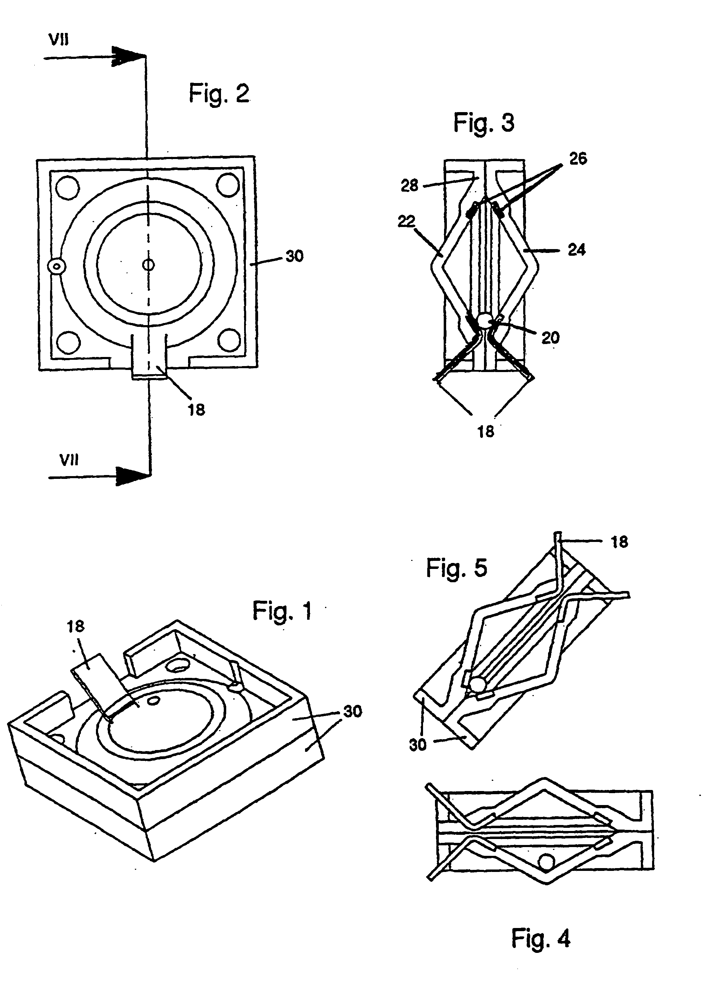

Die Fig. 1 bis 5 zeigen einen Neigungsschalter in verschiedenen Ansichten und Schaltstellungen. Das Gehäuse besteht aus zwei identisch ausgebildeten quadratischen Gehäusehälften 30, die einstückig mit Trichtern 22 bzw. 24 und den Trichterflanschen 28 aus Kunststoff gespritzt sind, wobei Kontaktringe 26 und Anschlüsse 18 mit eingespritzt werden können. Die Verbindung der beiden Gehäusehälften kann über die Flansche 28 durch Verklebung, Verschraubung oder Vernietung erfolgen, nachdem eine metallische Kontaktkugel 20 eingefügt ist. Der Durchmesser und das Gewicht der Kugel 20 sind derart bemessen, daß in Normallage (Fig. 4) die Kugel am unteren Ende des Trichters liegenbleibt oder beim Auftreten von Vibrationen begrenzt angehoben wird und wieder zurückfällt. Beim Überschreiten einer vorbestimmten Neigungslage muß die Kugel jedoch unter der Wirkung der Schwerkraft schnell nach dem Trichterrand rollen, um hier die Kontakte zu schließen.

Die Laufflächen der Trichter sind vorzugsweise glatt ausgebildet, sie können jedoch auch mit radialen oder in Umfangsrichtung verlaufenden Rippen und/oder Nuten versehen sein, um den Lauf der Kugel zu beeinflussen. Es kann ferner vorgesehen werden, den Lauf der Kugel magnetisch zu beeinflussen, indem an vorbestimmten Stellen an der Außenwand des Trichters Permanentmagnete angeordnet werden, die mit einer ferromagnetischen Kugel zusammenwirken und deren Lauf in bestimmter Weise beeinflussen.

Das Gehäuse ist vorzugsweise hermetisch abgeschlossen, um den Eintritt von Fremdkörpern zu verhindern. Der Raum, in dem sich die Kugel befindet, kann evakuiert oder mit einem inerten Gas gefüllt sein. Es ist auch möglich, diesen Raum mit einer Isolierflüssigkeit vorbestimmter Viskosität ganz oder teilweise auszufüllen, um den Lauf der Kugel in bestimmter Weise zu dämpfen.

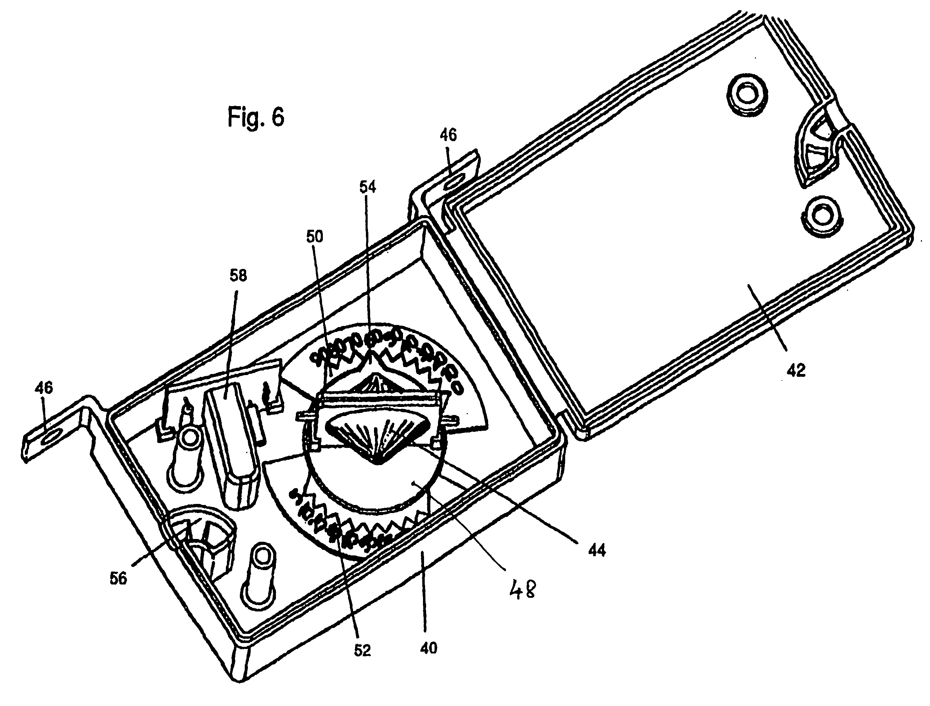

Fig. 6 zeigt ein aus Gehäuseunterteil 40 und angelenktem Oberteil 42 bestehendes Schaltergehäuse für den als Doppeltrichter oder Doppelhohlkegel ausgebildeten verstellbaren Neigungsschalter 44. Das Gehäuse ist mit Anschlußflanschen 46 ausgerüstet, über die das Schaltergehäuse 40, 42 an einer vorbestimmten Stelle des zu schützenden Gerätes in einer vorbestimmten Winkelstellung montiert werden kann. Der Neigungsschalter 44 ist auf einer Trägerplatte 48 montiert, die um eine die Doppeltrichterachse senkrecht schneidende Achse einstellbar ist. Diese Drehachse steht senkrecht auf der Gehäuseebene und verläuft beispielsweise zwischen den Trichterflanschen 28. Am Boden des Gehäuseunterteils 40 befinden sich gegenüberliegend zwei Kreisskalen 50 und 52. Rastausnehmungen dieser Kreisskalen wirken mit einer Rastnase 54 zusammen, die von der Trägerplatte 48 vorsteht. Beide Skalen sind in 10°-Abständen geteilt, wobei jeweils die Zwischenwerte auf der gegenüberliegenden Skala angeordnet sind, wobei die Schaltfunktion des Neigungsschalters in jeder 180°-Gegenstellung identisch ist, so daß die Rasten auf der Skala 50 jeweils von 0°, 10°, 20° ... 90° angegeben sind und auf der gegenüberliegenden Skala 52 in Winkelabständen zwischen 5°, 15°, 25° ... 85°. Das Gehäuse weist noch eine Kabelführung 56 und eine Leiterplatte 58 für die benutzten Schaltungselemente auf.

Wenn es die Einbausituation des benutzten Gerätes erfordert, daß die beiden Anschlußflansche 46 des Gehäuses horizontal liegen, dann wird die Trägerplatte 48 auf 0° eingestellt. Wenn die Flansche 46 vertikal übereinanderliegen sollen, dann erfolgt eine Einstellung auf 90°. In Schritten von 5° ist jede Zwischenstellung über die Rastskalen 52, 50 und die Rastnase 54 einstellbar.

Voraussetzung für eine richtige Winkeleinstellung ist der Einbau des Schaltergehäuses in einer vorbestimmten Ebene (innerhalb derer dann die Trichterachse verschwenkbar ist). Damit wird allen denkbaren Einbausituationen Rechnung getragen. Für Sonderfälle, die einen windschiefen Einbau erfordern, müßte ein zweites Drehgelenk senkrecht zum ersten vorgesehen werden.

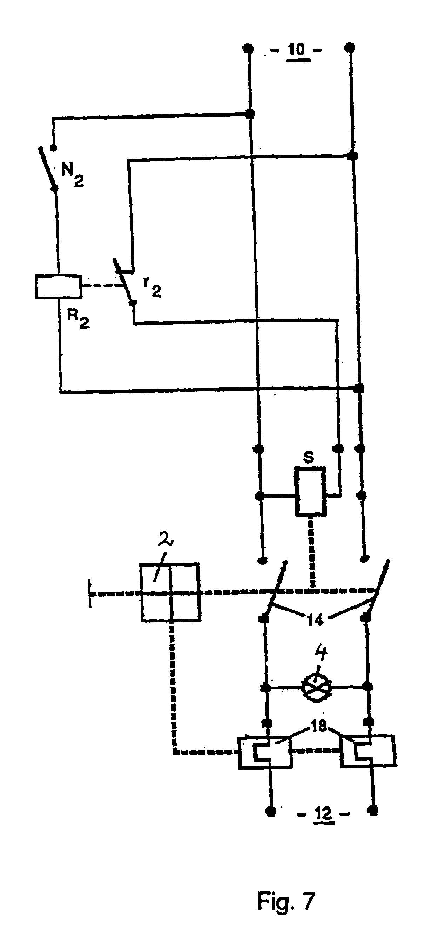

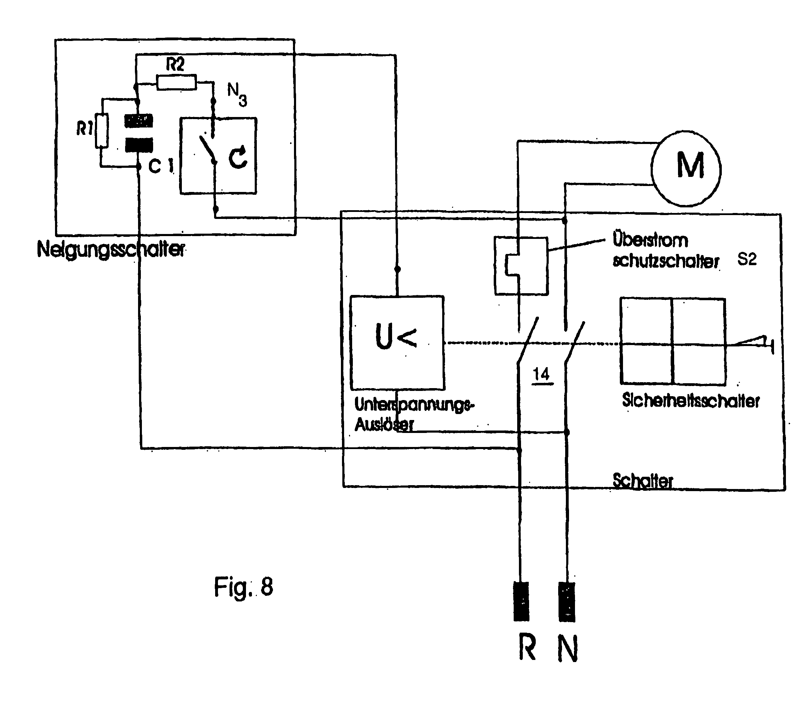

Bei den Schaltungsanordnungen gemäß Fig. 7 und 8 sind mit den Bezugszeichen 10 die Spannungsanschlußklemmen gekennzeichnet, z.B. für ein Wechselstromnetz oder einen Akku. Mit 12 sind die Anschlußklemmen für das elektrische Gerät bezeichnet, welches beispielsweise als Antriebsmotor M für ein Gartengerät oder als Heizwiderstand ausgebildet sein kann. Ein Neigungsschalter N₂ (Fig. 7) bzw. N₃ (Fig. 8) dient dazu, das elektrische Gerät abzuschalten, wenn dieses zusammen mit dem Neigungsschalter eine vorbestimmte Neigungslage überschreitet und z.B. umkippt.

Ein doppelpoliger Schalter 14 dient zum Einschalten bzw. Ausschalten. Der Schalter 14 kann gemäß Fig. 7 und 8 ein Relaisschalter sein, der einerseits über ein Relais S und andererseits über Überlastschalter 18, z.B. Bimetallschalter, über ein Schaltglied 2 schaltbar ist. Eine Kontroll-Leuchte 4 zeigt durch Aufleuchten an, daß das elektrische Gerät an Spannung liegt.

Bei dem Ausführungsbeispiel nach Fig. 7 ist der Neigungsschalter N₂ als Einschalter ausgebildet, d.h. er ist in Normalstellung des elektrischen Gerätes geöffnet und schließt, sobald das elektrische Gerät eine vorbestimmte Neigungslage überschreitet bzw. unterschreitet. Ein derartiger Neigungsschalter ist beispielsweise in den Fig. 1 bis 5 bzw. Fig. 6 dargestellt. Zu diesem Zweck liegt der Neigungsschalter N₂ in Reihe mit einem Relais R₂ an der Arbeitsspannung 10. Parallel hierzu liegt an der Arbeitsspannung 10 eine Reihenschaltung aus einem Relais S und einem Ruhekontakt r₂ des Relais R₂. Das Relais S wirkt auf den Hauptschalter 14 in der Weise, daß es den Hauptschalter 14 geschlossen hält, solange es erregt ist und über den Ruhekontakt r₂ an Spannung liegt. Wenn der Neigungsschalter N₂ bei Überschreiten oder Unterschreiten einer vorbestimmten Neigungslage des Gerätes einschaltet, dann wird das Relais R₂ an Spannung gelegt und öffnet den Ruhekontakt r₂, so daß das Relais S, das auch als Unterspannungsauslöser ausgebildet sein kann, spannungslos wird und der Hauptschalter 14 geöffnet wird. Eine Wiedereinschaltung des Schalters 14 nach Öffnung des Neigungsschalters N₂ und Schließen des Ruhekontakts r₂ kann über das Relais S (Nullspannungsrelais) nicht erfolgen, sondern die Wiedereinschaltung muß manuell willkürlich vorgenommen werden.

Gemäß einer anderen Schaltungsausbildung könnte der Kontakt r₂ auch als Arbeitskontakt ausgebildet sein und das Relais könnte nach Schließen des Neigungsschalters N₂ den Stromkreis des Relais S schließen, wenn dieses Relais als Schaltschütz ausgebildet ist, das bei Erregung den Schalter 14 öffnet.

Fig. 8 zeigt eine Schaltungsanordnung mit einem Neigungsschalter N₃ , der als Arbeitsschalter ausgebildet ist, der einerseits an die Netzleitung N und andererseits über den Widerstand R₂ und die Parallelschaltung aus R₁ und C₁ an die Netzleitung R angeschlossen ist. Ein Unterspannungsauslöser U< ist einerseits mit der Netzleitung N und andererseits mit der Verbindung von R₁ und R₂ verbunden. Der Unterspannungsauslöser U < schaltet den doppelpoligen Netzschalter 14, über den der Motor M (beispielsweise eines Rasenmähers oder Häckslers) an Spannung R, N liegt. Auf den Schalter 14 wirkt noch ein Sicherheitsauslöser S. Weiter ist ein Überstromschutzschalter S2 vorgesehen. Die Schaltungsanordnung arbeitet wie folgt:

Wenn der Schalter 14 eingelegt ist, liegt der Unterspannungsschalter über die Parallelschaltung von Widerstand R₁ und Kondensator C₁ am Netz R, N. Wenn der Neigungsschalter N₃ anspricht, d.h. schließt, dann wird über diesen Neigungsschalter der Unterspannungsauslöser über R₂ kurzgeschlossen, und bedingt durch die verminderte Spannung schaltet der Schalter 14 aus. Beim Wiederöffnen von N₃ wird zwar der Unterspannungsauslöser wieder an die Netzspannung R N gelegt, jedoch bleibt bis zur Wiedereinschaltung von 14 der Motor stromlos.

## Patentansprüche

1. Neigungsschalter zur Abschaltung von aus ihrer Normalstellung gekippten elektrischen Geräten mit den folgenden Merkmalen:
- in einem trichterartigen Hohlkörper (22, 24) befindet sich eine Kontaktkugel (20), die in Normalstellung des Gerätes an der Mündung des trichterartigen Hohlkörpers liegt;
- der trichterartige Hohlkörper weist am Außenrand im Abstand Kontaktringe (26) auf, die beim Überschreiten einer vorbestimmten Neigungslage in jeder Neigungsrichtung durch die Kontaktkuge (20) überbrückt werden;
**dadurch gekennzeichnet, daß** der trichterartige Hohlkörper (22,24) in einem Schaltergehäuse (40,42) derart bezüglich der Trichterachse einstellbar angeordnet ist, daß dieses Schaltergehäuse am Gerät in unterschiedlichen Winkelstellungen montierbar ist.

2. Neigungsschalter nach Anspruch 1,
**dadurch gekennzeichnet, daß** der Hohlkörper im Schaltergehäuse um wenigstens eine Achse dreheinstellbar ist, die die Trichterachse senkrecht schneidet.

3. Neigungsschalter nach den Ansprüchen 1 und 2,
**dadurch gekennzeichnet, daß** der Hohlkörper als symmetrischer Doppeltrichter (22, 24) ausgebildet ist.

4. Neigungsschalter nach Anspruch 3,
**dadurch gekennzeichnet, daß** der Hohlkörper auf einem Träger (48) angeordnet ist, der im Schaltergehäuse um eine die Trichterachse senkrecht schneidende Achse verstellbar ist und eine Markierung (54) aufweist, die mit einer Winkelskala (50) des Schaltergehäuses zusammenwirkt.

5. Neigungsschalter nach Anspruch 4,
**dadurch gekennzeichnet, daß** im Schaltergehäuse eine weitere der Einstellskala (50) diametral gegenüberliegende Einstellskala (52) vorgesehen ist, welche Zwischenskalenwerte aufweist, wobei die Winkeleinstellwerte durch Rastung festlegbar sind.

6. Neigungsschalter nach einem der Ansprüche 1 bis 5,
**dadurch gekennzeichnet, daß** der Hohlkörper im Schaltergehäuse um zwei senkrecht aufeinander stehende Achsen einstellbar ist.

7. Neigungsschalter nach einem der Ansprüche 1 bis 6,
**dadurch gekennzeichnet, daß** die Trichterlaufflächen für die Kugel mit Rillen bzw. Nuten ausgestattet sind und/oder der die Kugel (20) aufnehmende Raum mit einer Dämpfungsflüssigkeit vorbestimmter Viskosität an- oder ausgefüllt ist.

8. Neigungsschalter in einer dem elektrischen Gerät zugeordneten Schaltung nach einem der Ansprüche 1 bis 7,
**dadurch gekennzeichnet, daß** in der Schaltung Mittel vorgesehen sind, die ein Wiedereinschalten des Gerätes verhindern, wenn dieses und mit ihm der Neigungsschalter in die Ausgangsstellung zurückgeführt werden.

9. Neigungsschalter nach Anspruch 6,
**dadurch gekennzeichnet, daß** der Neigungsschalter (N₂) in Reihe mit einem Relais (R₂) an der Arbeitsspannung (10) liegt und einen Ruhekontakt (r₂ ) öffnet, der in Reihe mit einem Unterspannungsrelais (S) an der Arbeitsspannung (10) liegt, welches einen im Arbeitsstromkreis liegenden Schalter (14) öffnet.

10. Neigungsschalter nach Anspruch 8,
**dadurch gekennzeichnet, daß** der Neigungsschalter (N₃) beim Einschalten einen Unterspannungsauslöser (U<) kurzschließt, der das Gerät abschaltet.

11. Neigungsschalter nach Anspruch 10,
**dadurch gekennzeichnet, daß** der Unterspannungsauslöser (U<) in Reihe mit einem Kondensator (C₁) am Netz (RN) liegt und der Neigungsschalter parallel zum Unterspannungsauslöser liegt.

## Claims

1. Tilt switch for disconnecting electrical apparatuses tilted from their normal position having the following features:
- a contact sphere (20) is situated in a funnel-like hollow body (22, 24), and in the normal position of the apparatus lies at the opening of the funnel-like hollow body;
- the funnel-like hollow body has on the outer edge at a distance, contact rings (26) which are bridged by the contact sphere (20) when exceeding a predetermined tilt position in any tilt direction;
**characterised in that** the funnel-like hollow body (22, 24) is arranged to be adjustable with respect to the funnel axis in a switch housing (40, 42), such that this switch housing can be mounted on the apparatus in different angular positions.

2. Tilt switch according to claim 1, **characterised in that** the hollow body in the switch housing can be rotatably adjusted about at least one axis which vertically intersects the funnel axis.

3. Tilt switch according to claims 1 and 2, **characterised in that** the hollow body is designed as a symmetrical double funnel (22, 24).

4. Tilt switch according to claim 3, **characterised in that** the hollow body is arranged on a support (48), which can be adjusted in the switch housing about an axis vertically intersecting the funnel axis and has a marking (54) which cooperates with an angular scale (50) of the switch housing.

5. Tilt switch according to claim 4, **characterised in that** a further adjusting scale (52) diametrally opposite the adjusting scale (50) is provided in the switch housing, which adjusting scale (52) has intermediate scale values, wherein the angular adjusting values can be fixed by locking.

6. Tilt switch according to one of claims 1 to 5, **characterised in that** the hollow body in the switch housing can be adjusted about two axes standing vertically to one another.

7. Tilt switch according to one of claims 1 to 6, **characterised in that** the funnel bearing surfaces for the sphere are equipped with channels or grooves and/or the chamber receiving the sphere (20) is partly or completely filled with a damping liquid of predetermined viscosity.

8. Tilt switch in a circuit assigned to the electrical apparatus according to one of claims 1 to 7, **characterised in that** means are provided in the circuit which prevent reconnecting of the apparatus when the latter and with it the tilt switch are returned to the starting position.

9. Tilt switch according to claim 6, **characterised in that** the tilt switch (N₂) in series with a relay (R₂) is at the operating voltage (10) and opens a rest contact (r₂), which in series with an undervoltage relay (S) is at the operating voltage (10), which opens a switch (14) lying in the operating circuit.

10. Tilt switch according to claim 8, **characterised in that** the tilt switch (N₃), when reconnecting, short-circuits an undervoltage tripping device (U<), which disconnects the apparatus.

11. Tilt switch according to claim 10, **characterised in that** the undervoltage tripping device (U<) in series with a capacitor (C₁) is at the mains (RN) and the tilt switch lies parallel to the undervoltage tripping device.

## Revendications

1. Commutateur à inclinaison destiné à déconnecter des appareils électriques basculés depuis leur position normale et ayant les caractéristiques suivantes :
- dans un corps creux de type entonnoir (22, 24) se trouve une bille de contact (20) qui, en position normale de l'appareil, repose sur l'ouverture du corps creux de type entonnoir ;
- le corps creux de type entonnoir présente au niveau du bord extérieur des bagues de contact (26) qui sont court-circuitées par la bille de contact (20) en cas de dépassement d'une inclinaison prédéfinie dans chaque direction d'inclinaison ;
**caractérisé en ce que** le corps creux de type entonnoir (22, 24) est disposé dans un boîtier de commutateur (40, 42) de manière à être réglable par rapport à l'axe de l'entonnoir de telle sorte que ce boîtier de commutateur peut être monté sur l'appareil dans différentes positions angulaires.

2. Commutateur à inclinaison selon la revendication 1, **caractérisé en ce que** le corps creux est réglable par rotation dans le boîtier de commutateur autour d'au moins un axe qui croise perpendiculairement l'axe de l'entonnoir.

3. Commutateur à inclinaison selon les revendications 1 et 2, **caractérisé en ce que** le corps creux est réalisé sous la forme d'un double entonnoir symétrique (22, 24).

4. Commutateur à inclinaison selon la revendication 3, **caractérisé en ce que** le corps creux est disposé sur un support (48) qui peut être positionné dans le boîtier de commutateur autour d'un axe qui croise perpendiculairement l'axe de l'entonnoir et présente un repère (54) qui agit conjointement avec une graduation d'angle (50) du boîtier de commutateur.

5. Commutateur à inclinaison selon la revendication 4, **caractérisé en ce qu'**il est prévu dans le boîtier de commutateur une autre graduation de réglage (52) diamétralement opposée à la graduation de réglage (50), laquelle présente des valeurs de graduation intermédiaires, les valeurs de réglage de l'angle étant réglables par enclenchement.

6. Commutateur à inclinaison selon l'une des revendications 1 à 5, **caractérisé en ce que** le corps creux est réglable dans le boîtier de commutateur autour de deux axes perpendiculaires l'un à l'autre.

7. Commutateur à inclinaison selon l'une des revendications 1 à 6, **caractérisé en ce que** les surfaces de roulement de l'entonnoir pour la bille sont équipées de cannelures ou de rainures et/ou l'espace recevant la bille (20) est comblé ou rempli d'un liquide amortisseur ayant une viscosité prédéfinie.

8. Commutateur à inclinaison dans un circuit associé à l'appareil électrique selon l'une des revendication 1 à 7, **caractérisé en ce que** des moyens sont prévus dans le circuit qui empêchent une remise sous tension de l'appareil lorsque celui-ci et avec lui le commutateur à inclinaison sont ramenés dans la position initiale.

9. Commutateur à inclinaison selon la revendication 6, **caractérisé en ce que** le commutateur à inclinaison (N₂) est relié à la tension de service (10) en série avec un relais (R₂) et ouvre un contact de repos (r₂) qui est relié à la tension de service (10) en série avec un relais à minimum de tension (S), lequel ouvre un commutateur (14) dans le circuit du courant de service.

10. Commutateur à inclinaison selon la revendication 8, **caractérisé en ce que** le commutateur à inclinaison (N₃), lorsqu'il est actionné, court-circuite un déclencheur à minimum de tension (U<) qui déconnecte l'appareil.

11. Commutateur à inclinaison selon la revendication 10, **caractérisé en ce que** le déclencheur à minimum de tension (U<) est relié au réseau (RN) en série avec un condensateur (C₁) et le commutateur à inclinaison est relié en parallèle avec le déclencheur à minimum de tension.
